# FASCICULE DE BREVET EUROPEEN

(11) **EP 0 878 009 B1**
(45) Date de publication et mention de la délivrance du brevet: **02.08.2000**
(21) Numéro de dépôt: 97904479.9
(22) Date de dépôt: 03.02.1997
(51) Int. Cl.: G21C 3/32

(54) **ASSEMBLAGE DE COMBUSTIBLE NUCLEAIRE COMPORTANT UN EMBOUT SUPERIEUR**
KERNBRENNSTABBÜNDEL MIT KOPFSTÜCK
NUCLEAR FUEL ASSEMBLY WITH AN UPPER CAP

(30) Priorité: 02.02.1996 FR 9601307
(43) Date de publication de la demande: 18.11.1998
(73) Titulaire: FRAMATOME, 92400 Courbevoie (FR); COGEMA, F-78141 Velizy Villacoublay (FR)
(72) Inventeur: MAYET, Roland, F-69100 Villeurbanne (FR); BURFIN, Pascal, F-69290 Saint-Genis-les-Ollières (FR)
(74) Mandataire: Bouget, Lucien
(86) Numéro de dépôt international: FR9700212
(87) Numéro de publication internationale: WO9728534

(56) Documents cités:
- EP-A- 0 537 044
- FR-A- 2 171 279
- FR-A- 2 500 947
- US-A- 5 363 423

## Description

L'invention concerne un assemblage de combustible nucléaire comportant un embout supérieur réalisé de manière améliorée.

Les assemblages de combustible nucléaire et en particulier les assemblage de combustible pour réacteurs nucléaires à eau sous pression comportent un faisceau de crayons de combustible maintenus dans des dispositions parallèles et régulièrement espacées les unes des autres par une ossature rigide.

L'ossature de l'assemblage de combustible est constituée en particulier par des grilles-entretoises qui sont réparties suivant la longueur de l'assemblage de combustible et qui délimitent des cellules permettant de recevoir et de maintenir les crayons de combustible du faisceau.

Des tubes-guides qui se substituent à certains crayons de combustible à l'intérieur du faisceau traversent certaines cellules des grilles et sont éventuellement fixés sur les grilles dont ils assurent le maintien et la répartition suivant la longueur de l'assemblage de combustible.

Les tubes-guides présentent une longueur supérieure à la longueur des crayons de combustible et se trouvent en saillie par rapport aux extrémités du faisceau de crayons combustibles, aux extrémités de l'assemblage de combustible. L'ossature de l'assemblage de combustible est fermée par des embouts qui sont fixés sur les parties d'extrémité en saillie des tubes-guides de l'ossature.

Les assemblages de combustible qui présentent une forme prismatique droite, généralement à section carrée, sont placés, en position de service à l'intérieur du coeur du réacteur nucléaire, de manière que leur axe longitudinal soit vertical.

L'embout d'extrémité de l'assemblage de combustible qui se trouve à sa partie inférieure, appelé embout inférieur, sur lequel repose l'assemblage de combustible, comporte des pieds-supports et une plaque adaptatrice traversée par des ouvertures de fixation des tubes-guides et par des ouvertures de passage d'eau.

L'embout supérieur de l'assemblage de combustible qui se trouve à la seconde extrémité, supérieure de l'assemblage comporte en particulier une plaque adaptatrice transversale qui est traversée par des ouvertures de réception et de fixation des tubes-guides et par des ouvertures de passage d'eau.

Afin d'améliorer les performances de l'assemblage de combustible nucléaire, on cherche à augmenter le plus possible le taux de combustion du combustible contenu dans l'assemblage et à améliorer les conditions de fonctionnement hydraulique de l'assemblage qui est traversé de bas en haut par un flux d'eau de refroidissement à l'intérieur du coeur du réacteur.

En particulier, pour améliorer les performances hydrauliques de l'assemblage de combustible, on cherche à diminuer le plus possible la perte de charge de l'eau de refroidissement, lorsqu'elle traverse les plaques adaptatrices transversales des embouts en cherchant à obtenir une transparence, c'est-à-dire un rapport entre l'aire des ouvertures et l'aire des parties pleines des plaques adaptatrices, la plus forte possible.

La forme et la répartition des ouvertures de passage d'eau à travers les plaques adaptatrices des embouts sont définies de manière à permettre la fixation des tubes-guides de l'assemblage (par exemple vingt-quatre tubes-guides) sur les plaques adaptatrices des embouts et à limiter le déplacement axial des crayons combustibles de l'assemblage (par exemple deux cent soixante quatre crayons) en adoptant une répartition des ouvertures et des ligaments délimitant les ouvertures telle que chacun des crayons de l'assemblage se trouve en vis-à-vis d'un ligament.

En particulier, en ce qui concerne la plaque adaptatrice de l'embout supérieur de l'assemblage de combustible, les ouvertures de passage d'eau sont de forme oblongue et sont intercalées entre les trous de passage des tubes-guides. Ces ouvertures oblongues présentent des longueurs adaptées à la dimension des portions de la plaque adaptatrice intercalées entre les passages de tubes-guides.

Un tel réseau d'ouvertures oblongues de dimensions variables ne permet pas d'obtenir une très forte transparence de la plaque adaptatrice et une répartition homogène des ouvertures assurant le passage de l'eau de refroidissement.

Dans le FR-2.171.279, on décrit un embout inférieur d'assemblage de combustible dont la plaque adaptatrice comporte des ouvertures de forme carrée réparties suivant un réseau régulier sur toute la surface de la plaque adaptatrice. Autour des tubes-guides, fixés sur la plaque adaptatrice, les ouvertures carrées sont tronquées de manière à ménager une zone circulaire de fixation du tube-guide et présentent une forme à peu près triangulaire à angles arrondis. Cette forme de l'embout inférieur ne permet pas de régler le problème relatif aux courants d'eau à la sortie de l'embout supérieur et au fonctionnement des barres de commande, dans la mesure où l'embout supérieur décrit dans le FR-2.171.279 présente des ouvertures de grande dimension de formes irrégulières.

Le but de l'invention est donc de proposer un assemblage de combustible nucléaire comportant un faisceau de crayons combustibles maintenus par une ossature constituée par des grilles-entretoises réparties suivant la longueur du faisceau délimitant des cellules pour le passage des crayons, des tubes-guides se substituant à certains crayons du faisceau, dont la longueur est supérieure à la longueur des crayons, un embout inférieur fixé à l'une des extrémités des tubes-guides et un embout supérieur fixé à l'autre extrémité des tubes-guides et comportant une plaque adaptatrice transversale traversée par des ouvertures de passage des tubes-guide et par des ouvertures de passage d'eau, cet assemblage de combustible permettant de diminuer la perte de charge de l'eau de refroidissement du réacteur nucléaire traversant l'assemblage, par augmentation de la transparence de la plaque adaptatrice de l'embout supérieur et de limiter la formation de courants perturbateurs autour des tubes-guides, à la sortie de l'assemblage de combustible.

Dans ce but, les ouvertures de passage d'eau de la plaque adaptatrice de l'embout supérieur disposées dans une partie centrale de la plaque adaptatrice présentent une forme triangulaire à angles arrondis et sont réparties régulièrement autour d'une partie au moins des ouvertures de passage des tubes-guides.

Afin de bien faire comprendre l'invention, on va maintenant décrire, à titre d'exemple non limitatif, un assemblage de combustible nucléaire suivant l'invention et, de manière comparative, la plaque adaptatrice de l'embout supérieur d'un assemblage combustible suivant l'art antérieur.

La figure 1 est une vue en élévation d'un assemblage de combustible nucléaire pour réacteur nucléaire à eau sous pression.

La figure 2 est une vue en coupe axiale de l'embout supérieur de l'assemblage de combustible.

La figure 3A est une vue de dessus suivant 3-3 de la figure 2 d'une plaque adaptatrice d'un embout supérieur d'assemblage de combustible suivant l'art antérieur.

La figure 3B est une vue de dessus, analogue à la figure 3A, d'une plaque adaptatrice d'un assemblage de combustible suivant l'invention.

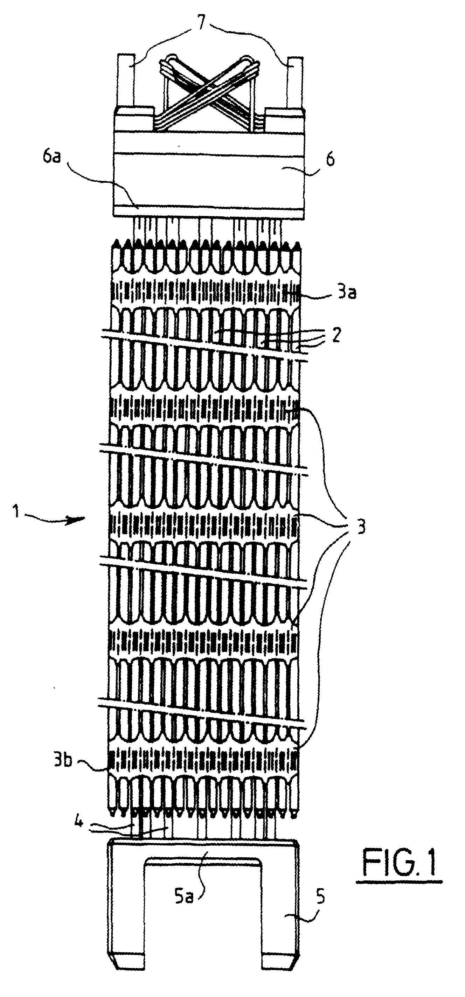

Sur la figure 1, on voit un assemblage de combustible d'un réacteur nucléaire à eau sous pression désigné de manière générale par le repère 1.

L'assemblage de combustible comporte un faisceau de crayons combustibles 2 qui sont placés dans des dispositions parallèles les uns aux autres et qui sont maintenus avec des espacements réguliers dans les sections transversales du faisceau par des grilles-entretoises 3 réparties suivant la longueur du faisceau.

Certaines positions définies par les cellules des grilles-entretoises 3 sont occupées par des tubes-guides 4 dont la longueur est supérieure à la longueur des crayons de combustible 2.

Les parties d'extrémité des tubes-guides 4 se trouvent en saillie aux extrémités du faisceau de crayons combustibles 2.

Les grilles-entretoises 3 de l'assemblage de combustible sont de plusieurs types, les grilles d'extrémité 3a et 3b étant réalisées de manière à pouvoir être fixées sur les tubes-guides et les grilles intermédiaires constituant des grilles de mélange du fluide de refroidissement.

L'ossature de l'assemblage de combustible constituée par les tubes-guides 4 et les grilles-entretoises 3, 3a et 3b est fermée à ses extrémités par des embouts 5 et 6. L'embout d'extrémité 5 ou embout inférieur, disposé à la partie inférieure de l'assemblage de combustible dans sa position de service, comporte des pieds-supports de l'assemblage de combustible et une plaque adaptatrice transversale 5a.

L'embout supérieur 6 comporte une plaque adaptatrice 6a et une embase supérieure sur laquelle sont fixés en particulier les ressorts 7 de maintien de l'assemblage de combustible sous la plaque supérieure de coeur du réacteur nucléaire.

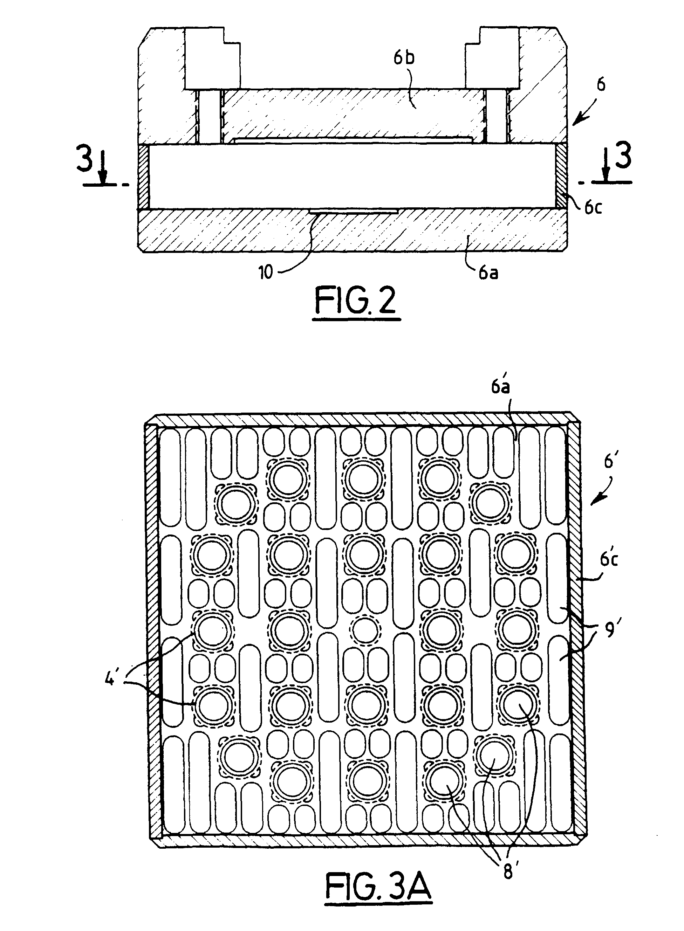

Comme il est visible sur la figure 2, l'embout supérieur de l'assemblage de combustible 6 comporte une plaque transversale 6a, appelée plaque adaptatrice, percée d'ouvertures, une embase 6b et une jupe 6c assurant la jonction entre la plaque adaptatrice 6a et l'embase 6b.

La plaque adaptatrice 6a, la jupe 6c et l'embase 6b présentent une section de forme carrée qui correspond à la section transversale de l'assemblage de combustible qui est de forme prismatique à base carrée.

L'embase 6b de l'embout supérieur 6 comporte des plots de fixation des ressorts de maintien de l'assemblage de combustible ainsi que des ouvertures et des pions de positionnement permettant l'accostage et la prise de l'assemblage de combustible par un moyen de manutention.

Sur la figure 3A, on a représenté en vue de dessus, la plaque adaptatrice 6'a d'un embout supérieur 6' d'un assemblage de combustible suivant l'art antérieur.

La plaque adaptatrice 6'a sur laquelle est fixée la jupe 6'c est percée d'un réseau d'ouvertures circulaires 8' dans chacune desquelles est fixée la partie d'extrémité d'un tube-guide 4'. Les parties d'extrémité des tubes-guides 4' peuvent être fixées et immobilisées dans les ouvertures 8' par des douilles vissées qui sont ensuite bloquées en rotation par rapport à la plaque adaptatrice par sertissage dans des embrèvements débouchant dans les ouvertures 8'.

La plaque adaptatrice 6'a présente une forme carrée et les ouvertures 8' de fixation des vingt-quatre tubes-guides de l'assemblage de combustible sont réparties suivant plusieurs rangées parallèles aux côtés de la plaque adaptatrice. De plus, une ouverture permettant de recevoir l'extrémité d'un tube d'instrumentation est disposée à la partie centrale de la plaque adaptatrice 6'a.

Afin d'assurer un passage de l'eau de refroidissement de l'assemblage de combustible à travers la plaque adaptatrice 6'a avec une perte de charge la plus réduite possible, on a prévu un réseau d'ouvertures de passage d'eau de formes circulaire et oblongue intercalées entre les ouvertures 8' de fixation des tubes-guides 4'.

Il est nécessaire de prévoir des ouvertures oblongues 9' de passage d'eau alignées suivant des directions parallèles à l'un des côtés de la plaque adaptatrice et présentant quatre longueurs différentes. Le choix de la disposition et de la longueur des ouvertures oblongues 9' de passage d'eau est défini de manière à augmenter la transparence de la plaque adaptatrice 6'a, c'est-à-dire le rapport entre la surface totale des ouvertures de passage d'eau 9' et la surface de la plaque adaptatrice.

La réalisation du perçage de la plaque adaptatrice 6'a qui comporte des ouvertures ayant quatre dimensions différentes et une répartition complexe, est une opération délicate et longue à réaliser.

De plus, la transparence de la plaque adaptatrice reste relativement faible dans la mesure où de nombreuses zones autour des ouvertures de fixation des tubes-guides ne peuvent être percées et également du fait qu'il est nécessaire de limiter le déplacement axial des crayons de l'assemblage, en prévoyant une disposition des ouvertures de la plaque adaptatrice telle que chacun des crayons se trouve en vis-à-vis d'un ligament. En outre, pour obtenir une résistance mécanique suffisante de la plaque adaptatrice, il n'est pas possible de réduire son épaisseur en deçà d'une certaine limite.

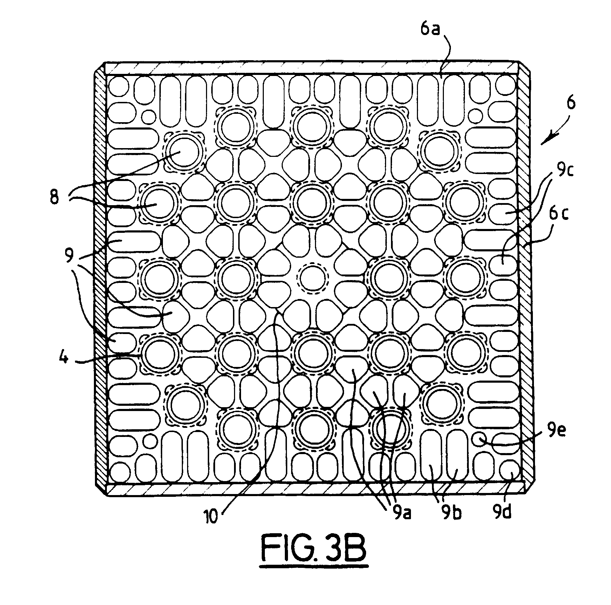

Sur la figure 3B, on a représenté la plaque adaptatrice 6a d'un embout supérieur 6 d'un assemblage de combustible suivant l'invention.

La plaque adaptatrice 6a qui présente une forme carrée est fixée sur la jupe 6c de l'embout.

Les vingt-quatre ouvertures 8 de fixation des parties d'extrémité des tubes-guides 4 ont une disposition analogue à la disposition des vingt-quatre ouvertures 8' de fixation des tubes-guides 4' de l'assemblage suivant l'art antérieur.

Les ouvertures 9 de passage de l'eau de refroidissement à travers la plaque adaptatrice 6a présentent des formes variables.

Dans une partie centrale de la plaque adaptatrice 6a, les ouvertures de passage d'eau 9a sont toutes identiques et présentent une forme triangulaire à angles arrondis. Les ouvertures 9a de forme triangulaire à angles arrondis sont régulièrement réparties autour des ouvertures 8 de fixation de huit tubes-guides 4 de l'assemblage de combustible et du tube d'instrumentation central.

Les huit positions d'ouvertures de fixation de tubes-guides 4, à la partie centrale de la plaque adaptatrice 6a, et la position centrale du tube d'instrumentation de l'assemblage de combustible sont entourées par une rangée complète d'ouvertures triangulaires à angles arrondis 9a.

Les seize autres ouvertures 8 de fixation de tubes-guides 4 de l'assemblage de combustible situées vers l'extérieur de la plaque adaptatrice 6a sont entourées seulement partiellement par des ouvertures triangulaires à angles arrondis 9a.

La partie périphérique de la plaque adaptatrice 6a le long des quatre bords extérieurs suivant lesquels est fixée la ceinture 6c est traversée par des ouvertures oblongues 9b et 9c ayant deux longueurs différentes.

Le perçage de la plaque adaptatrice 6a est complété dans chacun des angles de la plaque adaptatrice par des ouvertures circulaires 9d et 9e constituant également des ouvertures de passage d'eau.

Le perçage de la plaque adaptatrice 6a sous la forme d'une majorité d'ouvertures triangulaires à angles arrondis 9a situées dans la partie centrale de la plaque adaptatrice et d'ouvertures complémentaires oblongues 9b et 9c et circulaires 9d et 9e a permis d'obtenir une transparence de la plaque adaptatrice à l'eau de refroidissement sensiblement améliorée par rapport à la transparence d'une plaque suivant l'art antérieur comportant uniquement des ouvertures de passage d'eau de forme oblongue.

Le perçage de la plaque adaptatrice est réalisé de manière à obtenir le meilleur compromis possible entre la réduction de la perte de charge du fluide de refroidissement lors de la traversée de la plaque adaptatrice et l'obtention d'une résistance mécanique suffisante de la plaque adaptatrice.

En particulier, le réseau d'ouvertures de la plaque adaptatrice est entièrement symétrique par rapport aux diagonales de la plaque de forme carrée, si bien qu'on obtient une répartition homogène des contraintes.

Il est ainsi possible d'augmenter la transparence de la plaque, c'est-à-dire l'aire totale des passages d'eau et de diminuer l'épaisseur de la plaque, tout en conservant une résistance mécanique satisfaisante.

On a pu ainsi augmenter de 5 % la surface totale des passages d'eau de la plaque adaptatrice et diminuer l'épaisseur de la plaque adaptatrice, de manière à limiter la perte de charge.

Du fait d'une meilleure répartition et d'une forme plus adaptée des ouvertures de passage d'eau et de la diminution de l'épaisseur de la plaque adaptatrice, on a diminué de 7 % la résistance hydraulique au passage de l'eau de refroidissement opposée par la plaque adaptatrice 6a.

Comme il est visible sur les figures 2 et 3B, on prévoit au centre de la plaque adaptatrice 6a une cavité ou lamage 10, dans toute la zone de la plaque adaptatrice occupée par le tube d'instrumentation central et les ouvertures 9a entourant ce tube. On peut ainsi réduire légèrement la hauteur de l'embout tout en assurant la réception d'une grappe introduite dans l'assemblage.

L'assemblage de combustible suivant l'invention présente donc un meilleur fonctionnement hydraulique que les assemblages de combustible selon l'art antérieur et peut permettre d'obtenir un meilleur taux de combustion au cours de sa durée de vie.

L'invention ne se limite pas au mode de réalisation qui a été décrit.

C'est ainsi qu'on peut envisager des ouvertures dans la partie périphérique de la plaque adaptatrice de l'embout supérieur de l'assemblage de combustible ayant une forme et une répartition différentes des forme et répartition qui ont été décrites.

La taille des ouvertures triangulaires à angles arrondis est optimisée en fonction des dimensions des parties de la plaque adaptatrice situées autour des ouvertures de fixation des tubes-guides pour assurer une transparence maximale.

Dans le mode de réalisation décrit et représenté, chacune des ouvertures de fixation d'un tube-guide situées dans la partie centrale de la plaque adaptatrice est entourée par huit ouvertures de passage d'eau de forme triangulaire à angles arrondis. Il est bien sûr possible d'envisager un nombre et une répartition différents des ouvertures de forme triangulaire.

En outre, il est possible de combiner les avantages obtenus par le nouveau perçage de la plaque adaptatrice de l'embout supérieur avec d'autres avantages obtenus par une diminution de l'épaisseur de la plaque adaptatrice et un nouveau dimensionnement de l'embout.

L'invention s'applique à tout assemblage de combustible nucléaire comportant une ossature fermée par un embout supérieur comportant une plaque adaptatrice percée d'ouvertures de passage d'eau.

## Revendications

1. Assemblage de combustible nucléaire comportant un faisceau de crayons combustibles (2) maintenus par une ossature constituée par des grilles-entretoises (3, 3a, 3b) réparties suivant la longueur du faisceau délimitant des cellules pour le passage des crayons (2), des tubes-guides (4) se substituant à certains crayons (2) du faisceau dont la longueur est supérieure à la longueur des crayons, un embout inférieur (5) fixé à l'une des extrémités des tubes-guides (4) et un embout supérieur (6) fixé à l'autre extrémité des tubes-guides (4) et comportant une plaque adaptatrice transversale (6a) traversée par des ouvertures (8) de fixation des tubes-guides (4) et par des ouvertures (9) de passage d'eau, caractérisé par le fait que les ouvertures (9a) de passage d'eau de la plaque adaptatrice (6a) de l'embout supérieur (6) disposées dans une partie centrale de la plaque adaptatrice (6a) présentent une forme triangulaire à angles arrondis et sont réparties régulièrement autour d'une partie au moins des ouvertures (8) de fixation des tubes-guides (4).

2. Assemblage de combustible suivant la revendication 1, caractérisé par le fait que les ouvertures de passage d'eau (9b, 9c) disposées dans la partie périphérique de la plaque adaptatrice (6a) présentent une forme oblongue et sont de deux longueurs différentes.

3. Assemblage de combustible suivant l'une quelconque des revendications 1 et 2, caractérisé par le fait que les ouvertures de passage d'eau 9 comportent de plus des ouvertures circulaires (9d, 9e) disposées au voisinage des angles de la plaque adaptatrice (6a) de l'embout supérieur (6), de forme carrée.

4. Assemblage de combustible suivant l'une quelconque des revendications 1, 2 et 3, comportant vingt-quatre tubes-guides (4) dont les ouvertures de fixation (8) sont réparties dans la section de la plaque adaptatrice (6a) de l'embout supérieur (6) et un tube d'instrumentation central, caractérisé par le fait que les ouvertures de passage d'eau (9a) de forme triangulaire à angles arrondis sont régulièrement réparties autour de huit ouvertures de fixation (8) de tubes-guides situées dans la partie centrale de la plaque adaptatrice (6a) et autour du tube d'instrumentation central.

5. Assemblage de combustible suivant la revendication 4, caractérisé par le fait qu'autour de chacune des ouvertures de fixation (8) d'un tube-guide situé dans la partie centrale de la plaque adaptatrice (6a) de l'embout supérieur (6) et autour du tube d'instrumentation central, sont disposées et régulièrement réparties huit ouvertures de passage d'eau (9a) de forme triangulaire à angles arrondis.

6. Assemblage de combustible suivant l'une quelconque des revendications 1 à 5, caractérisé par le fait que l'épaisseur de la plaque adaptatrice (6a) de l'embout supérieur (6) est réduite par rapport à l'épaisseur de la plaque adaptatrice (6'a) d'un embout supérieur d'un assemblage de combustible de type connu.

## Patentansprüche

1. Kernbrennstoffkassette die umfaßt:
- ein Brennstabbündel (2), das durch ein Gestell gehalten wird, das durch Gitterstreben (3, 3a, 3b) gebildet ist, die längs der Bündel verteilt sind, wobei Zellen für den Durchgang der Stäbe (2) begrenzt sind,
- Führungsrohre (4), die bestimmte Stäbe (2) des Bündels ersetzen, dessen Länge größer ist als die Länge der Stäbe,
- ein unteres Ansatzstück (5), das an einem Ende der Führungsrohre (4) befestigt ist, und
- ein Kopfstück (6), das am anderen Ende der Führungsrohre (4) befestigt ist, und
- eine querverlaufende Adapterplatte (6a), in die Befestigungsöffnungen (8) der Führungsrohre (4) und in die Wasserdurchgangsöffnungen (9) eingelassen sind,
dadurch gekennzeichnet, daß
die Wasserdurchgangsöffnungen (9a) der Adapterplatte (6a) des Kopfstücks (6) eine dreieckige Form mit abgerundeten Ecken aufweisen und regelmäßig um einen Teil der Befestigungsöffnungen (8) der Führungsrohre (4) verteilt sind, wobei die Durchgangsöffnungen (9a) in einem Hauptbereich der Adapterplatte (6a) verteilt sind.

2. Brennstoffkassette nach Anspruch 1, dadurch gekennzeichnet, daß die Wasserdurchgangsöffnungen (9b, 9c) im Umfangsbereich der Adapterplatte (6a) angeordnet sind, eine längliche Form und zwei unterschiedliche Längen aufweisen.

3. Brennstoffkassette nach einem der Ansprüche 1 oder 2, dadurch gekennzeichnet, daß die Wasserdurchgangsöffnungen (9) ferner runde Öffnungen (9d, 9e) aufweisen, die in der Nähe der Ecken der quadratischen Adapterplatte (6a) des Kopfstücks (6) angeordnet sind.

4. Brennstoffkassette nach einem der Ansprüche 1 bis 3, gekennzeichnet durch vierundzwanzig Führungsstäbe (4), deren Befestigungsöffnungen (8) im Abschnitt der Adapterplatte (6a) des Kopfstücks (6) verteilt sind und ein Hauptrohr für Geräte aufweisen, dadurch gekennzeichnet, daß die dreieckförmigen Wasserdurchgangsöffnungen (9a) mit abgerundeten Ecken regelmäßig um die acht Befestigungsöffnungen (8) der Führungsrohre angeordnet sind, die im Hauptbereich der Adapterplatte (6a) um das Hauptrohr für Geräte angeordnet sind.

5. Brennstoffkassette nach Anspruch 4, dadurch gekennzeichnet, daß um jede Befestigungsöffnung (8) eines im Hauptbereich der Adapterplatte (6a) des Kopfstücks (6) befindlichen Führungsrohres und um ein Hauptrohr für Geräte acht dreieckförmige Wasserdurchgangsöffnungen (9a) regelmäßig verteilt und angeordnet sind.

6. Brennstoffkassette nach einem der Ansprüche 1 bis 5, dadurch gekennzeichnet, daß die Dicke der Adapterplatte (6a) des Kopfstücks (6) kleiner ist als die Dicke der Adapterplatte (6'a) eines Kopfstücks einer bekannten Brennstoffkassette.

## Claims

1. Nuclear fuel assembly including a cluster of fuel rods (2) held by a framework formed by spacer grids (3, 3a, 3b) distributed along the length of the cluster delimiting cells for the passage of the rods (2), guide tubes (4) being substituted for certain rods (2) of the cluster, the length of these guide tubes being greater than the length of the rods, a lower cap (5) fixed to one of the ends of the guide tubes (4) and an upper cap (6) fixed to the other end of the guide tubes (4) and including a transverse adapter plate (6a) through which pass openings (8) for fixing of the guide tubes (4) and openings (9) for the passage of water, characterised in that the openings (9a) for the passage of water of the adapter plate (6a) of the upper cap (6) which are disposed in a central part of the adapter plate (6a) have a triangular shape with rounded angles and are distributed regularly about at least some of the openings (8) for fixing of the guide tubes (4).

2. Fuel assembly as claimed in Claim 1, characterised in that the openings for the passage of water (9b, 9c) which are disposed in the peripheral part of the adapter plate (6a) have an oblong shape and are of two different lengths.

3. Fuel assembly as claimed in any one of Claims 1 and 2, characterised in that the openings for the passage of water (9) further include circular openings (9d, 9e) disposed in the vicinity of the comers of the adapter plate (6a) of the upper cap (6), having a square shape.

4. Fuel assembly as claimed in any one of Claims 1, 2 and 3, including twenty-four guide tubes (4) of which the fixing openings (8) are distributed in the section of the adapter plate (6a) of the upper cap (6) and a central instrumentation tube, characterised in that the openings for the passage of water (9a) of triangular shape with rounded angles are regularly distributed about eight openings (8) for fixing of guide tubes located in the central part of the adapter plate (6a) and about the central instrumentation tube.

5. Fuel assembly as claimed in Claim 4, characterised in that eight openings for the passage of water (9a) of triangular shape with rounded angles are disposed and regularly distributed about each of the openings (8) for fixing of a guide tube located in the central part of the adapter plate (6a) of the upper cap (6) and about the central instrumentation tube.

6. Fuel assembly as claimed in any one of Claims 1 to 5, characterised in that the thickness of the adapter plate (6a) of the upper cap (6) is reduced with respect to the thickness of the upper plate (6'a) of an upper cap of a fuel assembly of known type.
